# EUROPEAN PATENT SPECIFICATION

(11) **EP 1 631 077 B1**
(45) Date of publication and mention of the grant of the patent: **23.07.2008**
(21) Application number: 05018720.2
(22) Date of filing: 29.08.2005
(51) Int. Cl.: H04N 5/445

(54) **Digital multimedia broadcast receiving apparatus and method thereof**
Digitaler Multimediafernseh-Empfänger und Verfahren
Récepteur numérique de télévision et son procédé

(30) Priority: 27.08.2004 KR 2004067859
(43) Date of publication of application: 01.03.2006
(73) Proprietor: Samsung Electronics Co., Ltd., Suwon-si, Gyeonggi-Do (KR)
(72) Inventor: Yoo, Hoon c/o Samsung Electronics Co., Ltd., Suwon-si Gyeonggi-do (KR)
(74) Representative: Grünecker, Kinkeldey, Stockmair & Schwanhäusser Anwaltssozietät

(56) References cited:
- EP-A- 1 107 601
- WO-A-98/32284
- US-A1- 2001 013 123
- US-A1- 2004 005 142
- PATENT ABSTRACTS OF JAPAN vol. 2003, no. 11, 5 November 2003 (2003-11-05) & JP 2003 188915 A (THOMSON LICENSING SA), 4 July 2003 (2003-07-04)
- WEISS S M: "SWITCHING FACILITIES IN MPEG-2: NECESSARY BUT NOT SUFFICIENT" SMPTE JOURNAL, SMPTE INC. SCARSDALE, N.Y, US, vol. 104, no. 12, December 1995 (1995-12), pages 788-802, XP000543847 ISSN: 0036-1682
- RIN M.: 'A VLSI Architecture for Convolutional Deinterleavers' INTERNATIONAL CONFERENCE ON CONSUMER ELECTRONICS vol. CONF. 15, 05 June 1996, NEW YORK, IEEE, US, pages 130 - 131, XP000732945

## Description

The present invention relates to a digital multimedia broadcasting channel selection apparatus and a method thereof.

With the development of digital broadcasting technology and mobile communication technology, digital broadcasting services that enable users to view digital multimedia broadcasts even while the user is in motion is an increasing matter of concern. Digital multimedia broadcasting (hereinafter referred to as a "DMB") is a broadcasting service that makes it possible for a user to view diverse multimedia broadcasts through multiple channels or a personal portable receiver, or a receiver for vehicles having a non-directional receiving antenna, even while the user is in motion. Particularly, a satellite DMB adopted in Korea uses CDM (Code Division Multiplexing) technology that is similar to the CDMA mobile technology of the Standard Rec. BO.1130-4: System-E of ITU (International Telecommunication Union).

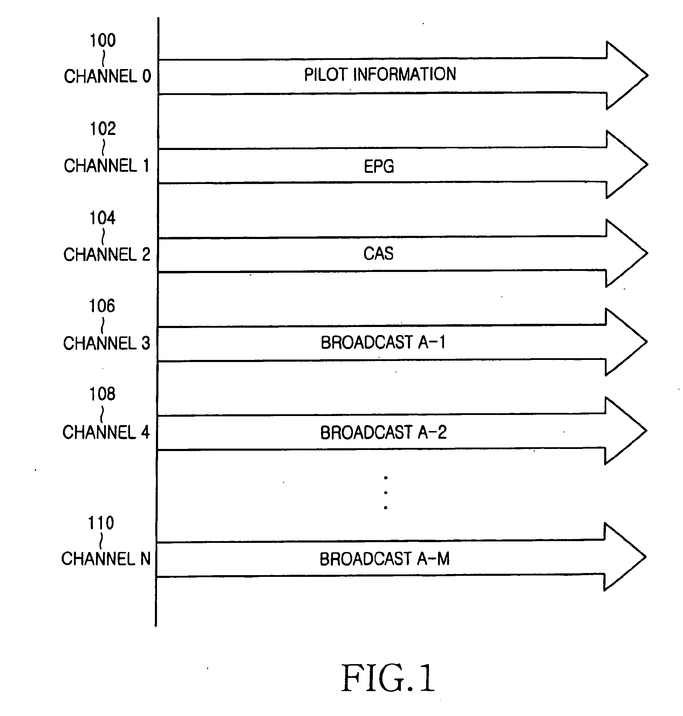

The DMB system receives five channels in order to provide one broadcasting service to a specified terminal. These five channels will be explained in detail with reference to FIG. 1.

FIG. 1 is a diagram illustrating the channels provided through a broadcasting service in a DMB system.

As illustrated in FIG. 1, in the DMB system, the broadcasting service is provided through a plurality of CDM transport channels. The CDM transport channels may be a channel '0' 100 for transmitting pilot information, a channel '1' 102 for transmitting an EPG (Electronic Program Guide) information, a channel '2' 104 for transmitting CAS (Conditional Access System) information, and M transport channels for transmitting a broadcast traffic. For example, an AV (Audio/Video) broadcasting channel signal is transmitted through a channel '3' 106 of a broadcast 'A-1', a channel '4' 108 of a broadcast 'A-2' and a channel 'N' 110 of a broadcast 'A-M'. The video broadcasting channel of the AV broadcasting channel is composed of two CDM channels, and the audio broadcasting channel thereof is composed of one CDM channel.

In the DMB system, the receiving apparatus needs to change a PID (Packet Identification) corresponding to a broadcasting channel subject to selection and open a CDM channel that interworks with the PID when it selects the AV broadcasting channel. The receiving apparatus fills buffers of a deinterleaver for the changed broadcasting channel, and then displays the changed broadcasting channel. It takes time to fill and empty the deinterleaver buffers whenever the broadcasting channel is changed. Specifically, it takes about 3 to 4 seconds in addition to the time required for filling the buffers for storing an AV stream, so that a user needs to wait for a long time whenever the broadcasting channel is changed.

An automatic channel selection method is an important function for seeking convenience in use, and has been used in a terminal that receives analog FM/AM audio broadcasts. The automatic channel selection method provides the corresponding channel service to the user as it changes the broadcasting channels.

As described above, if the automatic channel selection method is applied to the DMB receiving apparatus, a time for filling the deinterleaver buffers is required whenever the CDM channel is changed, and this time is added to a time for filling the buffers for storing the AV stream, so that the user is required to wait whenever the channel is selected.

US 2001/0013123 A1 discloses a customized program creation by splicing server based video, audio or graphical segments. The customized programming creation system is able to transmit customized programming offered to individual users based upon their known profile or their response to contemporaneous queries. Through the use of splice points encoded through an MPEG process, a programming transmission centre can inconspicuously splice disparate program segments together to create a single custom program stream for delivery to a single user or multiple users for the same profile. Using interactive programming technology, a user profile is created and stored based on known, purchased and/or usage based variables. The interactive programming system collects information through the user's receiver by monitoring the users viewing habits and cataloguing user responses to interactive programming queries. A processor preferably coordinates and controls the function of a storage server and transmission components such as a multiplexer, a modulator and a transmitter. The processor can direct the selection and transmission of particular programming segments based upon system software stored in a memory. Switching takes place in the multiplexer by switching to a packet in a different data stream. Instead of selecting the data packet identified by the next PID in the present data stream, the multiplexer chooses the synchronous PID from a corresponding data stream. In order to choose the desired signal to which to switch, the multiplexer identifies the PID of each incoming data packet and sends the PID information to the processor. Preferably, each incoming video and audio packet from the storage server has its own PID.

US 2004/0005142 A1 discloses a method and apparatus for recording/reproducing multi-channel streams. The multi-channel stream reproducing method checks whether or not a reproduced multi-channel stream belongs to the same broadcast RF channel, and deletes PSI (program specific information) packets included in the channel stream excluding one channel stream if it belongs to the same RF channel, and makes new PSI packets with reference to PSI packets included in reproduced multi-channel stream to replace them, if not. A device to record a multi-channel stream is disclosed, wherein the device may be a digital media recorder which is able to record onto a writable HD-DVD. The digital media recorder comprises two tuners, for tuning their respective path bands to an RF band of a digital broadcast TV signal, and two PCR/PSI decoders, for extracting packets containing PCR and PSI from a digital stream of RF channel, that are chosen by the two tuners, respectively. The digital media recorder further comprises two stream selectors, which respectively select a sub-channel from a digital stream outputted through the PCR/PSI decoders, two buffers for storing TPs (transport packets) constituting each sub-channel stream while adding counts in clock counters to each transport packet whenever it arrives and a controller for conducting overall control operation of all elements for multi-stream record.

Accordingly, the present invention has been designed to solve at least the above problems occurring in the prior art.

It is the object of the present invention to provide a digital multimedia broadcasting channel selection apparatus and a method thereof that can automatically select channels in a digital broadcast receiving apparatus.

This object is solved by the subject matter of the independent claims.

Preferred embodiments are defined by the subject matter of the dependent claims.

An aspect of the present invention is also to provide a digital multimedia broadcasting channel selection apparatus and a method thereof that can reduce the waiting time required for channel selection during an automatic channel selection operation in a digital broadcast receiving apparatus.

In one embodiment of the present invention, there is provided a digital broadcast receiving apparatus which includes a memory unit for storing packet IDs corresponding to broadcasting channels, a program changing unit for reading from the memory unit the packet ID corresponding the next broadcasting channel, a transport channel processing unit for deinterleaving a transport channel corresponding to the read packet ID, and a buffering unit including a first buffer for buffering transport channel data output from the transport channel processing unit and a second buffer for outputting data of a second transport channel.

The above object and other aspects, features and advantages of the present invention will be more apparent from the following detailed description taken in conjunction with the accompanying drawings, in which:
FIG 1 is a diagram illustrating channels provided through a broadcasting service in a DMB system;
FIG. 2 is a block diagram illustrating the construction of a satellite DMB broadcast receiving apparatus according to an embodiment of the present invention;
FIG. 3 is a diagram illustrating an output state of an AV broadcasting channel during a channel selection in a DMB receiving apparatus according to an embodiment of the present invention; and
FIG. 4 is a flowchart illustrating a control operation of a DMB receiving apparatus according to an embodiment of the present invention.

Preferred embodiments of the present invention will be described in detail hereinafter with reference to the accompanying drawings. In the following description of the present invention, only the elements necessary for understanding the operation of the present invention will be explained, and a detailed description of known functions and configurations incorporated herein will be omitted when it may obscure the subject matter of the present invention.

The present invention provides a method for minimizing the waiting time for a channel selection during the viewing of broadcasting channel information if a next broadcasting channel during an automatic channel selection operation. In order to apply the automatic channel selection to a DMB broadcasting, PID values corresponding to respective broadcasting channels are automatically changed, in succession or in a specified order, through a UI (User Interface).

In order to apply the present invention to a video channel, at least four CDM channels for an AV stream should be open. However, if an audio channel is selected, only two open CDM channels will suffice for the audio channel signal. The principle of an automatic audio channel selection according to the embodiment of the present invention will be explained.

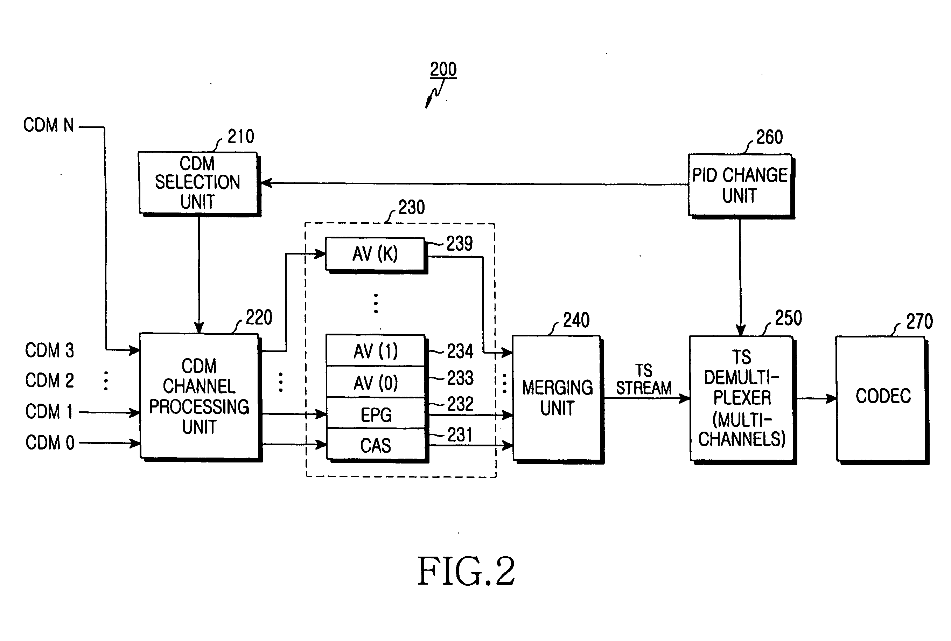

FIG. 2 is a block diagram illustrating the construction of a DMB broadcast receiving apparatus according to an embodiment of the present invention.

Referring to FIG 2, the DMB broadcast receiving apparatus 200 according to an embodiment of the present invention includes a CDM selection unit 210 for selecting a CDM channel corresponding to a PID (Packet Identification), a CDM channel processing unit 220 for deinterleaving a specified CDM channel according to a CDM selection signal from the CDM selection unit 210, a buffering unit 230 for buffering respective deinterleaved CDM transport channels, a merging unit 240 for generating a broadcasting channel stream by merging data from the buffered CDM channels, and a TS (Transport Stream) demultiplexer 250 for demultiplexing the input broadcasting channel stream. The DMB broadcast receiving apparatus 200 further includes a codec 270 for converting a digital signal into an audio signal or a video signal.

Additionally, the DMB broadcast receiving apparatus 200 includes a PID change unit 260 for outputting PID values corresponding to the selected broadcasting channels of an automatic channel selection as requested by a user or by a specified condition.

The number of CDM channels that can be decoded by the DMB receiving apparatus is less than the total number of CDM channels provided in the DMB system. For example, in the case of the present satellite DMB system, data is transmitted through 29 CDM transport channels, and the DMB receiving apparatus is constructed to process 5 CDM transport channels. Accordingly, the DMB receiving apparatus essentially receives a channel for transmitting pilot information, a channel for transmitting EPG (Electronic Program Guide) information and a channel for transmitting a CAS (Conditional Access System) information. In addition, the DMB receiving apparatus receives two CDM transport channels for transmitting an actual AV stream. A satellite DMB receiving apparatus may be constructed to process five or more CDM transport channels and the present invention can be applied to such a DMB receiving apparatus.

Referring to FIG. 2, if an automatic channel selection is requested by a user or by a specified condition, the PID change unit 260 provides the PID values corresponding to the CDM transport channels to the CDM selection unit 210. The PID change unit 260 may be connected to a user interface that can receive a user's selection of a specified broadcasting channel. Also, the PID change unit 260 may be connected to a specified memory (not illustrated) that stores the broadcasting channels to be automatically selected and the corresponding PIDs. In this case, the PID change unit 260 outputs the PID values at predetermined intervals to match a buffering time of the buffering unit 230.

The CDM selection unit 210 receives the PID corresponding to the next broadcasting channel from the PID change unit 260, and instructs the CDM channel processing unit 220 to receive the corresponding CDM channel. The CDM channel processing unit 220 obtains the CDM transport channel corresponding to the PID from among the CDM transport channels broadcast from the DMB system and deinterleaves the obtained CDM transport channel. Then, the CDM channel processing unit 220 outputs the deinterleaved transport channel data to the buffering unit 230. The buffering unit 230 includes a plurality of buffers 231 to 239 and stores the transport channel data output from the CDM channel processing unit 220. The plurality of buffers 231 to 239 provide the buffered transport channel data to the merging unit 240. The merging unit 240 generates a broadcasting channel stream to be output to the user from the transport channel data and outputs the generated broadcasting channel stream to the TS demultiplexer 250. The TS demultiplexer 250 divides the broadcasting channel stream by broadcasting channels and provides the divided broadcasting channel stream to the codec 270. The codec 270 converts the broadcasting channel data provided from the TS demultiplexer 250 into an audio signal or video signal.

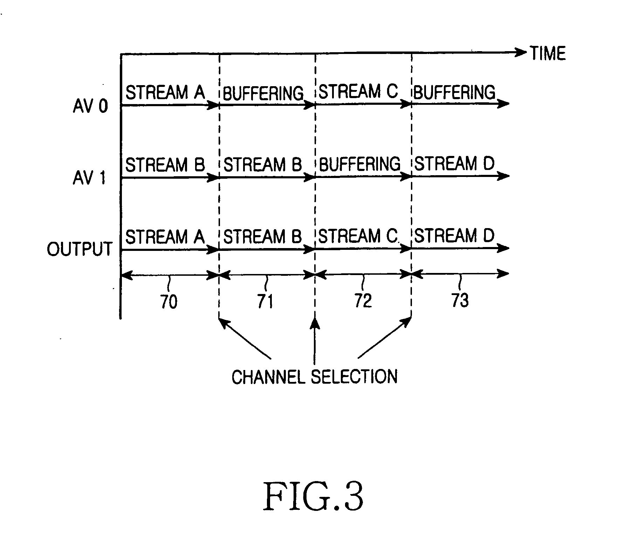

The output state of the AV broadcasting channel during the automatic channel selection operation of the DMB broadcast receiving apparatus 200 will be explained with reference to FIG. 3.

FIG. 3 is a diagram illustrating the output state of the AV broadcasting channel during the channel selection operation of the DMB receiving apparatus according to an embodiment of the present invention.

Referring to FIG.3, the DMB receiving apparatus 200 according to the present invention buffers a stream 'A' and a stream 'B', for example, in a period prior to a period 70 according to a set order during the automatic channel selection operation. Then, the DMB receiving apparatus 200 outputs the stream 'A' to the user according to the order of the automatic channel selection in the period 70. After the lapse of a set time, the DMB receiving apparatus 200 outputs the buffered stream 'B' to the user in a period 71. At this time, the DMB receiving apparatus 200 receives the CDM channel of the next broadcasting channel, and buffers a stream 'C' corresponding to the next broadcasting channel. Similarly, the DMB receiving apparatus 200 buffers a stream 'D' corresponding to the next broadcasting channel by receiving the CDM channel of the next broadcasting channel as it outputs the buffered stream 'C' to the user in a period 72. In the embodiment of the present invention as described above, the streams 'A', 'B', 'C' and 'D' are output according to the type AV broadcasting channel. That is, in the case of the video channel, the respective streams are output through two CDM channels and in the case of the audio channel, the respective streams are output through one CDM channel.

The DMB receiving apparatus 200 according to the present invention stores information about the CDM channels. Accordingly, the DMB receiving apparatus 200 minimizes the waiting time for the channel selection that the user feels by receiving the CDM channels of the broadcasting channels in a set order during the automatic channel selection operation.

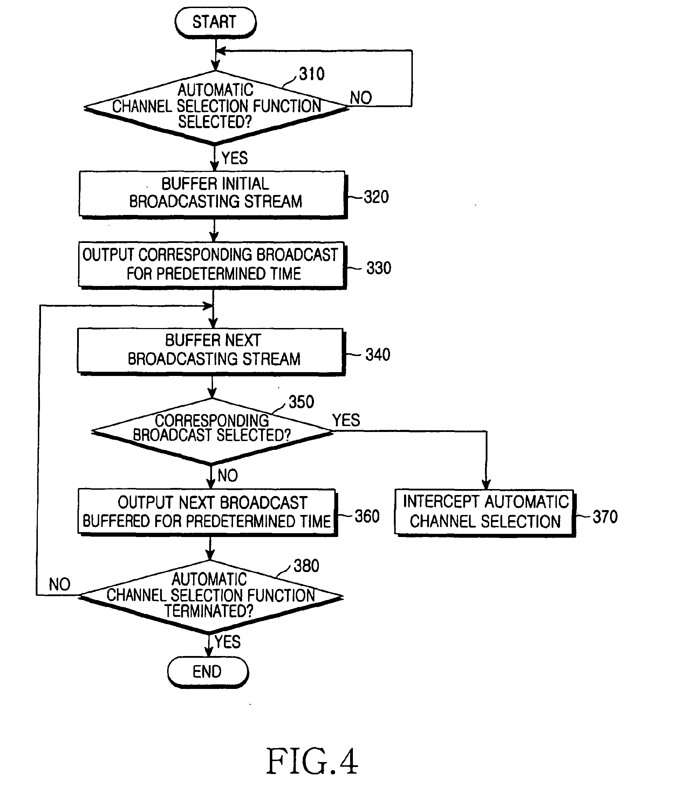

The operation of the DMB receiving apparatus 200 will be explained with reference to FIG. 4.

FIG. 4 is a flowchart illustrating the control operation of the DMB receiving apparatus according to an embodiment of the present invention.

Referring to FIG. 4, the DMB receiving apparatus determines whether or not the automatic channel selection is requested by the user or by a specified condition at step 310. The specified condition may be a condition that the time for the automatic channel selection set by the user in advance arrives. If the automatic channel selection is requested, the DMB receiving apparatus 200 buffers the initial broadcasting stream by confirming the PID value corresponding to the set broadcasting channel to be selected in succession and receiving the corresponding CDM channels at step 320. Then, the DMB receiving apparatus 200 outputs the broadcasting stream buffered for a predetermined amount of time at step 330. Simultaneously, the DMB receiving apparatus 200 buffers the corresponding broadcasting stream by obtaining the PID value corresponding to the set broadcasting channel to be output in succession to the broadcasting stream presently output at step 340.

Then, the DMB receiving apparatus 200 determines if the presently output broadcasting stream is selected by the user at step 350. If the presently output broadcasting stream is selected by the user, the DMB receiving apparatus 200 proceeds to step 370 to stop the automatic channel selection operation.

If the presently output broadcasting stream is not selected by the user, the DMB receiving apparatus 200 proceeds to step 360, and outputs the next broadcast buffered for the set amount of time. Then, the DMB receiving apparatus 200 judges whether the automatic channel selection function is terminated by the user at step 380.

If the automatic channel selection function is not terminated by the user, the DMB receiving apparatus 200 returns to the step 340, and buffers the corresponding broadcasting stream by obtaining the PID value of the next broadcasting channel to be outputted and receiving the corresponding CDM channel.

As described above, the DMB receiving apparatus according to the present invention can minimize the waiting time for the channel selection by receiving CDM channels of the broadcasting channels in the set order and buffering the next broadcasting stream during the automatic channel selection.

While the present invention has been shown and described with reference to certain preferred embodiments thereof, it will be understood by those skilled in the art that various changes in form and details may be made therein without departing from the scope of the present invention as defmed by the appended claims.

## Claims

1. A DMB, Digital Multimedia Broadcasting, receiving apparatus, comprising:
a memory unit for storing packet IDs, PIDs, corresponding to broadcasting channels;
a PID change unit (260) for reading the packet lDs from the memory unit;
a transport channel processing unit (220) for deinterleaving transport channels corresponding to the read packet IDs; and
a buffering unit (230) for buffering the deinterleaved transport channels, wherein said buffering unit (230) comprises:
a first buffer for buffering transport channel data output from the transport channel processing unit (220); and
a second buffer for simultaneously outputting data of another transport channel of which a buffering is completed.

2. The DMB receiving apparatus as claimed in claim 1 being adapted for providing an automatic channel selection function.

3. The DMB receiving apparatus as claimed in claim 1 or 2, further comprising a transport channel selection unit (210) for generating a transport channel selection signal corresponding to the read packet ID and outputting the generated transport channel selection signal to the transport channel processing unit (220).

4. The DMB receiving apparatus as claimed in one of claims 1 to 3, further comprising a merging unit (240) for merging data from the buffered transport channels and generating a broadcasting channel stream.

5. The DMB receiving apparatus as claimed in claim 1 or 2, further comprising a transport stream demultiplexer (250) for dividing the broadcasting channel stream based on broadcasting channels.

6. The DMB receiving apparatus as claimed in one of claims 1 to 5, wherein the packet ID is read from the memory unit corresponding a next broadcasting channel by the PID change unit (260).

7. The DMB receiving apparatus as claimed in claim 1, wherein the first buffer and the second buffer alternately output the transport channel data and buffer the transport channel data.

8. The DMB receiving apparatus as claimed in one of claims 1 to 7, wherein the PID change unit (260) reads the packet IDs at set intervals.

9. A DMB receiving method comprising the steps of:
outputting a packet ID corresponding to a next broadcasting channel;
selecting a transport channel corresponding to the packet 10;
deinterleaving the selected transport channel; and
displaying data of another transport channel of which a buffering is completed while buffering the deinterleaved transport channel.

10. The digital broadcast receiving method as claimed in claim 9, wherein the packet IDs are output at set intervals.

11. The digital broadcast receiving method as claimed in claim 10, wherein the set intervals are determined according to a buffering time.

12. The digital broadcast receiving method as claimed in one of claims 9 to 11, further comprising the step of intercepting an output of the packet ID corresponding to the next broadcasting channel if a signal for selecting the transport channel being displayed is input.

## Patentansprüche

1. Empfangsvorrichtung für DMB (Digital Multimedia Broadcasting), die umfasst:
eine Speichereinheit zum Speichern von Paketkennungen, die Rundfunkkanälen entsprechen;
eine Paketkennungs-Änderungseinheit (260) zum Lesen der Paketkennungen aus der Speichereinheit;
eine Transportkanal-Verarbeitungseinheit (220), mit der Deinterleaving von Transportkanälen durchgeführt wird, die den gelesenen Paketkennungen entsprechen; und
eine Puffereinheit (230) zum Puffern der Deinterleaving unterzogenen Transportkanäle, wobei die Puffereinheit (230) umfasst:
einen ersten Puffer zum Puffern von Transportkanaldaten, die von der Transportkanal-Verarbeitungseinheit (220) ausgegeben werden; und
einen zweiten Puffer zum simultanen Ausgeben von Daten eines anderen Transportkanals, deren Puffern abgeschlossen ist.

2. Empfangsvorrichtung für DMB nach Anspruch 1, die zum Bereitstellen einer automatischen Kanalauswählfunktion eingerichtet ist.

3. Empfangsvorrichtung für DMB nach Anspruch 1 oder 2, die des Weiteren eine Transportkanall-Auswähleingeit (210) zum Erzeugen eines Transportkanal-Auswählsignals, das der gelesenen Paketkennung entspricht, und zum Ausgeben des erzeugten Transportkanal-Auswählsignals an die Transportkanal-Verarbeitungseinheit (220) umfasst.

4. Empfangsvorrichtung für DMB nach einem der Ansprüche 1 bis 3, die des Weiteren eine Mischeinheit (240) zum Mischen von Daten von den gepufferten Transportkanälen und zum Erzeugen eines Rundfunkkanalstroms umfasst.

5. Empfangsvorrichtung für DMB nach Anspruch 1 oder 2, die des Weiteren einen Transportstrom-Demultiplexer (250) zum Teilen des Rundfunkkanalstroms auf Basis von Rundfunkkanälen umfasst.

6. Empfangsvorrichtung für DMB nach einem der Ansprüche 1 bis 5, wobei die Paketkennung durch die Paketkennungs-Änderungseinheit (260) aus der Speichereinheit gelesen wird, die einem nächsten Rundfunkkanal entspricht.

7. Empfangsvorrichtung für DMB nach Anspruch 1, wobei der erste Puffer und der zweite Puffer abwechselnd die Transportkanaldaten ausgeben und die Transportkanaldaten puffern.

8. Empfangsvorrichtung für DMB nach einem der Ansprüche 1 bis 7, wobei die Paketkennungs-Änderungseinheit (260) die Paketkennungen in festgelegten Intervallen liest.

9. Empfangsverfahren für DMB, das die folgenden Schritte umfasst:
Ausgeben einer Paketkennung, die einem nächsten Rundfunkkanal entspricht;
Auswählen eines Transportkanals, der der Paketkennung entspricht;
Durchführen von Deinterleaving des ausgewählten Transportkanals; und
Anzeigen von Daten eines weiteren Transportkanals, für den Puffern abgeschlossen ist, während der Deinterleaving unterzogene Transportkanal gepuffert wird.

10. Empfangsempfangsverfahren für DMB nach Anspruch 9, wobei die Paketkennungen in festgelegten Intervallen ausgegeben werden.

11. Empfangsempfangsverfahren für DMB nach Anspruch 10, wobei die festgelegten Intervalle entsprechend einer Pufferzeit bestimmt werden.

12. Empfangsempfangsverfahren für DMB nach einem der Ansprüche 9 bis 11, das des Weiteren den Schritt des Unterbrechens einer Ausgabe der Paketkennung umfasst, die dem nächsten Rundfunkkanal entspricht, wenn ein Signal zum Auswählen des angezeigten Transportkanals eingegeben wird.

## Revendications

1. Dispositif de réception de radiodiffusion multimédia numérique (DMB), comprenant :
une unité de mémoire pour mémoriser des identités de paquets (PID) correspondant à des canaux de radiodiffusion ;
une unité de changement d'identités de paquets (260) pour lire les identités de paquets à partir de l'unité de mémoire ;
une unité de traitement de canaux de transport (220) pour désentrelacer des canaux de transport correspondant aux identités de paquets lues ; et
une unité de mise en mémoire tampon (230) pour mettre en mémoire tampon les canaux de transport désentrelacés, ladite unité de mise en mémoire tampon (230) comprenant :
une première mémoire tampon pour mettre en mémoire tampon des données de canaux de transport délivrées en sortie de l'unité de traitement de canaux de transport (220) ; et
une deuxième mémoire tampon pour délivrer simultanément en sortie des données d'un autre canal de transport dont une mise en mémoire tampon est achevée.

2. Dispositif de réception de radiodiffusion multimédia numérique selon la revendication 1, adapté pour assurer une fonction de sélection de canal automatique.

3. Dispositif de réception de radiodiffusion multimédia numérique selon la revendication 1 ou 2, comprenant de plus une unité de sélection de canal de transport (210) pour générer un signal de sélection de canal de transport correspondant à l'identité de paquet lue et délivrer en sortie le signal de sélection de canal de transport généré à l'unité de traitement de canaux de transport (220).

4. Dispositif de réception de radiodiffusion multimédia numérique selon l'une des revendications 1 à 3, comprenant de plus une unité de mélange (240) pour mélanger des données venant des canaux de transport mis en mémoire tampon et générer un train de canaux de radiodiffusion.

5. Dispositif de réception de radiodiffusion multimédia numérique selon la revendication 1 ou 2, comprenant de plus un démultiplexeur de train de transport (250) pour diviser le train de canaux de radiodiffusion en fonction de canaux de radiodiffusion.

6. Dispositif de réception de radiodiffusion multimédia numérique selon l'une des revendications 1 à 5, dans lequel l'identité de paquet est lue à partir de l'unité de mémoire en correspondance avec un canal de radiodiffusion suivant par l'unité de changement d'identités de paquets (260).

7. Dispositif de réception de radiodiffusion multimédia numérique selon la revendication 1, dans lequel la première mémoire tampon et la deuxième mémoire tampon délivrent en sortie les données de canaux de transport et mettent en tampon les données de canaux de transport en alternance.

8. Dispositif de réception de radiodiffusion multimédia numérique selon l'une des revendications 1 à 7, dans lequel l'unité de changement d'identités de paquets (260) lit les identités de paquets à des intervalles déterminés.

9. Procédé de réception de radiodiffusion multimédia numérique, comprenant les étapes consistant à :
délivrer en sortie une identité de paquet correspondant à un canal de radiodiffusion suivant ;
sélectionner un canal de transport correspondant à l'identité de paquet ;
désentrelacer le canal de transport sélectionné ; et
afficher des données d'un autre canal de transport dont une mise en mémoire tampon est achevée tout en mettant en mémoire tampon le canal de transport désentrelacé.

10. Procédé de réception de radiodiffusion numérique selon la revendication 9, dans lequel les identités de paquets sont délivrées en sortie à des intervalles déterminés.

11. Procédé de réception de radiodiffusion numérique selon la revendication 10, dans lequel les intervalles déterminés sont déterminés en fonction d'un temps de mise en mémoire tampon.

12. Procédé de réception de radiodiffusion numérique selon l'une des revendications 9 à 11, comprenant de plus l'étape consistant à intercepter une sortie de l'identité de paquet correspondant au canal de radiodiffusion suivant si un signal pour sélectionner le canal de transport qui est affiché est délivré en entrée.
